# NEUE EUROPÄISCHE PATENTSCHRIFT

(11) **EP 1 587 694 B2**
(45) Veröffentlichungstag und Bekanntmachung des Hinweises auf die Entscheidung über den Einspruch: **17.08.2016**
(45) Hinweis auf die Patenterteilung: 07.05.2008
(21) Anmeldenummer: 04701588.8
(22) Anmeldetag: 13.01.2004
(51) Int. Cl.: B44C 1/14, G09F 3/02, B60R 13/04, B60R 13/02, B60R 13/00

(54) **MEHRLAGIGES DEKORBAND MIT EINER RELIEFSTRUKTUR UND EINER ALUMINIUMSCHICHT UND VERFAHREN ZU DESSEN HERSTELLUNG**
LAMINATED DECORATIVE STRIP HAVING A RELIEF STRUCTURE AND A COMPRISING AN ALUMINIUM LAYER AND METHOD FOR MANUFACTURING THEREOF
RUBAN DE DECORATION MULTICOUCHES EN RELIEF COMPRENANT UNE COUCHE D'ALUMINIUM ET PROCEDE DE FABRICATION ASSOCIE

(30) Priorität: 13.01.2003 DE 10300919; 13.01.2003 DE 20300435 U
(43) Veröffentlichungstag der Anmeldung: 26.10.2005
(60) Teilanmeldung: 07018211.8
(73) Patentinhaber: Kunststoff-Technik Scherer & Trier GmbH & Co. KG, 96247 Michelau (DE)
(72) Erfinder: REISSENWEBER, Dirk, 96237 Ebersdorf (DE)
(74) Vertreter: Weickmann & Weickmann PartmbB
(86) Internationale Anmeldenummer: PCT/EP2004/000169
(87) Internationale Veröffentlichungsnummer: WO 2004/062831

(56) Entgegenhaltungen:
- EP-A- 1 129 952
- EP-A2- 0 381 856
- DE-A- 3 147 043
- DE-A- 3 940 628
- DE-A1- 1 943 138
- DE-A1- 2 813 636
- DE-A1- 3 203 801
- DE-B- 1 288 298
- DE-U- 1 800 639
- DE-U- 20 016 842
- DE-U1- 9 321 214
- GB-A- 814 565
- GB-A- 930 062
- GB-A- 1 076 033
- JP-A- H0 387 227
- US-A- 1 856 928
- US-A- 3 136 676
- US-A- 3 150 707
- US-A- 3 780 152
- US-A- 3 980 512
- US-A- 4 220 681
- US-A- 4 231 831
- US-A- 4 253 597
- US-A- 4 556 588
- US-A- 4 560 596
- E. H. R. VIEWEG, PROF. DR.-ING.ET AL.: 'Kunststoff-Handbuch', 1975, CARL HANSER VERLAG, MÜNCHEN - WIEN Seite 1029
- H. SAECHTLING: 'Kunstoff-Taschenbuch', 1992, CARL HANSER VERLAG, MÜNCHEN - WIEN Seiten 160 - 161

## Beschreibung

Die vorliegende Erfindung betrifft ein mehrlagiges Dekorband, sowie ein Herstellungsverfahren für ein derartiges Dekorband gemäß den Ansprüchen 1 und 11.

Solche Dekorbänder finden beispielsweise Verwendung beim Bau von Automobilen, wo sie etwa als obere Abdeckung an Türschwellen angebracht werden können. Als Material für die Zierfläche wird häufig Alu- minium verwendet, um dem Dekorband ein ansprechen- des äußeres Erscheinungsbild zu verleihen. In der Aluminum-Oberfläche ist eine reliefartige Struktur ausgebil- det, beispielsweise der Name oder ein Markenzeichen des Herstellers. Über den Automobilbau hinaus finden derartige Dekorbänder auch Verwendung als Typen- schilder bzw. Ettiketten von technischen Gerätschaften aller Art, man denke beispielsweise an Haushaltsgeräte (Kühlschränke, Gefrierschränke, Geschirrspühler), Sa- nitäranlagen (Duschgriff bzw. Duschkabine).

Werden solche Dekorbänder ganz aus Alumi- num hergestellt, so ist eine gewisse Mindestdicke des verwendeten Aluminumblechs von ungefähr 1,5 mm er- forderlich, um ein ausreichend stabiles Dekorband zu er- halten, bei dem eine aufgeprägte Struktur dauerhaft in ansprechender Weise erhalten bleibt. Da die Prägetiefe der reliefartigen Struktur in der Regel nicht mehr als 0,2 mm beträgt, wird also im Vergleich zum "sichtbaren" Oberflächenbereich eine relativ große Menge von Alu- minum benötigt. Dieser relativ große im Prinzip überflüs- sige Aluminium-Anteil stellt zum einen einen erheblichen Kostenfaktor für solche Dekorbänder dar und führt au- ßerdem zu einem relativ hohem Gewicht der Dekorbän- der. Wenn man bedenkt, dass solche als Massenartikel eingesetzten Dekorbänder naturgemäß trotz eines mög- lichst edlen äußeren Erscheinungsbildes kaum nennens- werte Herstellungskosten verursachen sollten, so ist der Wert von Materialeinsparungen ohne weiteres ersicht- lich. Ersetzt man einen Teil des Aluminiums, der nicht sichtbar ist, durch andere Materialien, die leichter und/ oder billiger sind (beispielsweise Kunststoff), so stellt sich das Problem, dass ein einfaches Aufprägen von scharf- gezeichneten reliefartigen Strukturen nicht mehr gelingt. Ursache hierfür ist, dass die Verbindungsfähigkeiten der einzelnen Komponenten eines solchen Verbundwerkstücks unterschiedlich sind. Aus diesem Grund gelingt es nicht, im Prägeverfahren optisch ansprechende Re- sultate zu erzielen.

Eine weitere Möglichkeit der Oberflächenbear- beitung eines Werkstücks, beispielsweise eines Dekor- bandes, besteht darin, die gewünschte Struktur in die Metalloberfläche einzuätzen. Nachteilig bei dieser Vor- gehensweise ist jedoch, dass das Ätzen herstellungs- technisch relativ aufwändig ist, da mindestens ein wei- terer Arbeitsschritt zur Beschichtung der Oberfläche mit einer Maskierungsschicht erforderlich ist. Weiterhin ist es nachteilig, dass nach dem Ätzvorgang die Alumini- umoberfläche völlig blank und vor Korrosion nicht geschützt wäre. Daher ist es zwingend erforderlich, dass nach dem Ätzvorgang ein Korrosionsschutz durch Elo- xieren oder Lackieren aufgebracht wird, was wiederum erhebliche Mehrkosten verursacht. Im Falle einer Lak- kierung würde man zudem die durch Reliefätzen vorher eingebrachte Mattierung zuschwemmen. Die Folge wäre ein weniger wertanmutendes Aussehen.

Die DE 31 47 043 A offenbart eine aus einem Aluminium-Kunststoff-Verbundwerkstoff hergestellte Platte gemäß dem Oberbegriff von Anspruch 1, bei der als Trägermaterial eine Verbundplatte mit zwischen Alu- miniumblechen festliegendem Kern dient, die an zumin- dest einer Außenfläche großflächig mit einer Aluminium- folie kaschiert ist. Die Aluminiumfolie kann vor dem Auf- bringen auf das Trägermaterial durch Anodisieren oder durch eine entsprechende mechanische Strukturierung mit einer Dekorfläche versehen sein.

Aufgabe der vorliegenden Erfindung ist es da- her, ein Dekorband der genannten Art bereitzustellen, bei dem bei verringerter Masse des eingesetzten Metalls weiterhin eine ansprechend gestaltete reliefartige Ober- flächenstruktur ausgebildet werden kann, sowie ein Her- stellungsverfahren für ein derartiges Dekorband anzu- geben.

Zur Lösung der genannten Aufgabe sieht die vorliegende Erfindung gemäß einem ersten Aspekt ein mehrlagiges Dekorband mit den Merkmalen von Anspruch 1 vor.

Das Band umfasst eine Oberlage aus Metall, vorzugsweise aus Aluminium. An der Oberseite der Oberlage ist eine reliefartige Struktur eingeprägt und ihre Unterseite ist fest mit einer Verstärkungslage aus Kunst- stoff verbunden. Erfindungsgemäß ist die Verstärkungs- lage an der bereits mit der reliefartigen Struktur ausge- bildeten Oberlage aufextrudiert. Da in diesem Fall die reliefartige Struktur an der Oberlage aus Metall eingeprägt wird, solange diese noch nicht mit der Verstär- kungslage aus Kunststoff verbunden ist, ist das Ausbil- den von exakten und scharfen Konturen mittels eines Prägeverfahrens in sehr einfacher Weise möglich. Dies wird noch dadurch begünstigt, dass bei dem erfindungs- gemäßen Band die Oberlage aus Metall vergleichsweise dünn ist. Beim Prägevorgang drückt der Prägestempel das die Oberlage bildende dünne Band z.B. aus Alumi- nium, gegen ein komplementär geformtes Gegenstück, so dass auch komplexere reliefartige Strukturen exakt reproduziert werden können - die Verstärkungslage aus Kunststoff dagegen würde beim Prägen die Reliefbildung beeinträchtigen insbesondere im Bereich scharfer Kan- ten. Auch wäre zu befürchten, dass nach dem Prägen der Zusammenhalt zwischen der Verstärkungslage und der Oberlage zumindest stellenweise leidet.

Das Anbringen der Verstärkungslage aus Kunststoff an der auf diese Weise bereits bearbeiteten Oberlage aus Metall kann derart geschehen, dass die die reliefartige Struktur tragende Oberseite nicht mehr verändert wird. Auf diese Weise ist es möglich, ein leichtes und billiges Metallband herzustellen, da die Menge an zur Herstellung des Metallbandes einzusetzendem Metall gegenüber einem herkömmlichen Metallband auf einen Bruchteil reduziert ist. Im Falle der Verwendung von Aluminium kann gewährleistet werden, dass eine ge- gen Korrosion schützende Lackierung der Oberseite (Sichtseite) bei der Herstellung des Bandes erhalten bleibt.

Zum erfindungsgemäßen Anbringen der Ver- stärkungslage an der Oberlage wird ein Extrusionsver- fahren verwendet, bei dem die Verstärkungslage in einer Extrusionsmaschine plastifiziert vorliegt und auf die Oberlage aufextrudiert wird. Insbesondere zur Herstellung von Massenartikeln sind Extrusionsverfahren besonders geeignet, da durch diese Herstellungsweise hohe Durchsätze von hergestellten Artikeln erreichbar sind.

Zur Ausbildung einer sauberen Oberfläche mit scharf ausgeprägten Reliefstrukturen ist lediglich eine geringe Dicke der Oberlage erforderlich, so dass es günstig ist, wenn deren Dicke kleiner als 1 mm ist, vorzugs- weise kleiner als 0,4 mm ist. Dabei sollte die Tiefe der reliefartigen Struktur nicht größer als 0,5 mm, vorzugs- weise nicht größer als 0,2 mm sein.

Die Dicke der Verstärkungslage sollte ausreichend groß sein, um ein Band zu erhalten, das hinrei- chend formbeständig, sowie hinreichend wiederständsfähig ist. Es ist jedoch wünschenswert, wenn das Band eine gewisse Flexibilität bewahrt, so dass die Dicke der Verstärkungsläge günstigerweise ² 1 mm sein sollte, vor- zugsweise ² 0,6 mm sein sollte.

Die Stabilität des Bands kann noch dadurch verbessert werden, dass die Verstärkungslage Fasern, vorzugsweise Mineralfasern enthält. Durch solche Fasern können insbesondere die thermischen Längenaus- dehnungen von metallischer Oberlage und Verstärkungslage aus Kunststoff aneinander angeglichen werden.

Die Verstärkungslage enthält bevorzugt Polyvinylchlorid (PVC), Acrylnitrilbutadienstyrol (ABS), Polyamid (PA) oder Polypropylen (PP). Jeder dieser Kunststoffe ist relativ einfach im Extrusionsverfahren handhabbar und weist bei einer vernünftigen Dicke (im Bereichvon 1 mm oder geringer) eine ausreichende Festigkeitauf. Dies gilt insbeondere dann, wenn dem jeweils verwendeten Kunststoffmaterial zusätzlich ein faserartiger Stoff beigemischt ist.

Als Schutz der Reliefstruktur auf der Oberseiteder Oberlage ist erfindungsgemäß vorgesehen, dass auf der Oberseite der Oberlage eine weitere, bevorzugt durchsichtige Kunst- stofflage angeordnet ist. Auch diese weitere Kunststofflage ist bevorzugt aus Polyvinylchlorid (PVC), Acrylnitrilbutadienstyrol (ABS), Polyamid (PA) oder Polypropylen (PP) gebildet. Sie weist günstigerweise eine Dicke von² 0,5 mm auf, vorzugsweise von ² 0,2 mm. Auch die weitere Kunststofflage ist auf der Oberseite der Oberlage aufextrudiert. Hierbei ist es besonders günstig, die Verstärkungsläge auf der Unterseite der Oberlageund die weitere Kunststofflage auf der Oberseite der Oberlage in einer einzigen Extrusionsmaschine gleichzeitig aufzuextrudieren, so dass kein weiterer Herstellungsschritt erforderlich wird.

Um die Verbindung der Oberlage aus Metall mit der Verstärkungslage aus Kunststoff zu verbessern, kann vorgesehen sein, dass auf der Unterseite der Ober- lage ein Haftlack aufgetragen ist. Darüber hinaus kann vorgesehen sein, dass auf der Oberseite der Oberlage ein Schutzlack aufgetragen ist, der beispielsweise einen Schutz der sichtbaren Oberfläche der Oberlage gegen- über äußeren Einflüssen (insbesondere UV-Strahlung und Straßenstreueinsatz) bewirkt. Darüber hinaus kann dieser Schutzlack durch Zusatz von Mineralien oder Farben auch als Designelement benutzt werden.

Die Befestigung des mehrlagigen Bandes auf seinem letztgültigen Träger kann sowohl durch Verklebung (z.B. doppeltes Klebeband) als auch durch Verclipsen oder Verschweißen mit dem letztgültigen Träger bewerkstelligt werden.

Es ist auch denkbar für eine andere Anwendung, z.B. Bau, das Band zu einem tragenden Element zu verstärken.

Zur Herstellung des erfindungsgemäßen mehrlagigen Dekorbandes gemäß einem weiteren Aspekt der vorliegenden Erfindung wird ein Verfahren mit den Merk- malen von Anspruch 11 vorgeschlagen. Dieses Verfahren umfasst die folgenden Schritte:
a) Einprägen einer reliefartigen Struktur in die Oberseite der Oberlage und
b) nachfolgend Anbringen einer Verstärkungslage aus Kunststoff an der Oberlage.

Es wurde bereits ausgeführt, dass gerade dadurch, dass die reliefartige Struktur an der Oberlage aus Metall eingeprägt wird, solange diese noch nicht mit der Verstärkungslage aus Kunststoff verbunden ist, das Ausbilden von exakten und scharfen Konturen durch ein Prägeverfahren sehr einfach möglich wird, dies um so mehr, da die Oberlage aus Metall möglichst dünn sein soll. Für eine möglichst gut haftende Anbringung der Verstärkungslage aus Kunststoff an der bearbeiteten Oberlage sind Verfahren geeignet, bei denen die reliefartige Struktur auf der Oberseite der Oberlage nicht mehr verändert wird. Erfindungsgemäß geeignet hierfür sind Extrusionsverfahren, wobei die Verstärkungslage aus Kunststoff in Schritt b) aufextrudiert wird.

Da das Extrusionsverfahren prinzipell ein kontinuierliches Herstellungsverfahren ist, bei dem zu jeder vorgegebenen Zeiteinheit aus einer bestimmten Menge zuzuführender Eingangswerkstoffe eine vorgegebene Menge eines Endprodukts erzeugt wird, ist es nicht ohne weiteres möglich, dieses mit einem Prägeverfahren zu kombinieren, das zumindest bei hohen Qualitätsanforderungen an das Prägebild ein diskontinuierlich arbeitendes Herstellungsverfahren ist. Im vorliegenden Fall stellt sich somit das Problem, dass beim Aufprägen der reliefartigen Struktur auf die Metalloberlage die Fortbewegung der Metalloberlage einem ständigen Wechsel aus Anhalten während des Aufdrückens des Prägestem- pels und Weitertransportieren unterworfen ist, während es durch die Extrusionsmaschine mit konstanter Trans- portgeschwindigkeit bewegt werden muss. Zur Abstim- mung dieser unterschiedlichen Bewegungsarten der Oberlage kann deshalb vorgesehen sein, dass im Her- stellungsablauf die Verstärkungslage an der Oberlage unmittelbar nach dem Prägen der reliefartigen Struktur angebracht wird, wobei die Oberlage nach dem Prägen und vor dem Anbringen der Verstärkungslage wenig- stens eine Pufferanordnung durchläuft, innerhalb der sie sich zeitweise ansammeln kann. Beispielsweise kann dies dadurch realisiert werden, dass das die Oberlage zwischen der Prägeeinheit und der Extrusionmaschine eine schlaufenartige Anordnung bildet (z.B. einfach in einem gewissen Grad durchhängt), die sich in periodi- schem Wechsel vergrößert und verkleinert.

Die erfindungsgemäß an der Oberseite der Oberlage als Schutzlage angeordnete wei- tere Kunststofflage ist,ebenfalls in Schritt b) auf die Oberlage aufextrudiert. Hierfür kann ein Doppelextruder vorgesehen sein, mit zwei Extrusionsköpfen die einander gegenüberliegend angeordnet sind und zwischen denen die Oberlage hindurch transportiert wird. Auf diese Weise kann das Anbringen sowohl der Verstärkungslage als auch der Schutzlage in einem einzigen Arbeitsgang erfolgen.

Zum Schutz der Oberlage der darin eingepräg- ten reliefartigen Struktur vor äußeren Einflüssen, z.B. UV-Strahlung und Korrosion, kann ein an der Oberfläche der Oberlage aufgetragener Schutzlack dienen. Bei dem erfindungsgmäßen Verfahren bietet sich die Möglichkeit, diesen Schutzlack bereits vor dem Prägen der reliefarti- gen Struktur an der Oberlage anzubringen, da durch den Prägevorgang die Schutzlackschicht nicht beschädigt wird. Es können bereits mit einem Schutzlack versehene Bänder z.B. aus Aluminium verwendet werden, die von Bandherstellern zu billigen Preisen kommerziell erhältlich sind.

In entsprechender Weise kann - falls ge- wünscht ebenfalls bereits vor dem Prägen an der Unterseite der Oberlage ein Haftlack angebracht werden, der eine besonders feste Haftung der Verstärkungslage an der Oberlage bewirken soll. Auch solche Bänder, bzw. Bänder, die sowohl einen Schutzlack auf einer Seite als auch einen Haftlack auf der anderen Seite aufweisen, können kommerziell zu günstigen Konditionen bezogen werden.

Ein Ausführungsbeispiel der Erfindung wird im folgenden anhand der beigefügten Zeichnungen im Detail beschrieben. Es zeigt:
Figur 1 einen Längschnitt durch ein erfindungsgemä- ßes mehrlagiges Band; und
Figur 2 eine stark vereinfachte schematische Darstel- lung einer Anordnung zur Herstellung des erfindungsgemäßen Bands in Querschnittsansicht.

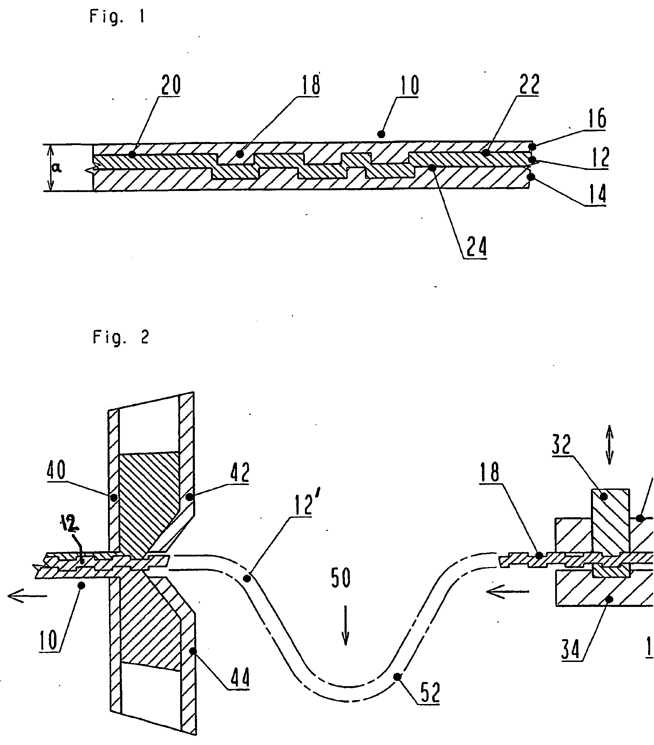

In Figur 1 ist in einer Längschnittansicht ein Ausschnitt durch ein erfindungsgemäßes mehrlagiges Band 10 gezeigt. Das erfindungsgemäße Band 10 ist aus drei Lagen zusammengesetzt, nämlich einer in der Mitte angeordneten Metalllage 12 aus Aluminium, einer dar- unter angeordneten Verstärkungslage 14 aus Kunststoff sowie einer in Figur 1 oben angeordneten weiteren Schutzlage 16. Alle drei Lagen sind derart miteinander verbunden, dass sie aneinander anhaften, wobei die Verbindung zwischen der Aluminiumlage 12 und der Verstärkungslage 14 so fest ist, so dass die beiden Lagen 12, 14 praktisch nicht voneinander getrennt werden können. Im Gegensatz hierzu ist die obere Schutzlage 16 lediglich schwach mit der Aluminiumlage 12 verbunden, so dass sie leicht von Hand von der Aluminiumlage 12 abgezogen werden kann. Die Funktion der Schutzlage 16, die ebenfalls aus Kunststoff besteht, ist primär ein Schutz der Aluminiumlage 12 von mecha- nischer Beschädigung beim Herstellprozess. Sekundär ist die Schutzlage 16 ein Schutz bis zum endgültigen Anbringen des Bands 10 an einem vorgesehenen Produkt.

Weiterhin ist die Oberfläche 20 der Aluminium- lage 1 2 mit einer reliefartigen Struktur 18 ausgebildet, die durch Einprägen eines bestimmten Textes oder gra- phischen Symbols in das dünne Aluminiumblech 12, bevor dieses mit den beiden Kunststofflagen 14, 16 ver- bunden worden ist, entstanden ist. Die beiden Kunststoff- lagen 14 und 16 sind nach dem Einprägen der reliefarti- gen Struktur 18, erfindungsgemäß durch Extrudieren, derart mit der Aluminiumlage 12 verbunden worden, dass sie über die gesamte Ober- bzw. Unterfläche der Aluminiumlage 12 hinweg an derselben anliegen. Dabei kann je nach Wunsch die Oberseite 22 der Schutzlage und/ oder die Unterseite 24 der Verstärkungslage 14 glatt sein oder ebenfalls die Konturen der reliefartigen Struktur - unter Umständen in abgeschwächter Form aufweisen.

Die Dicke a des in Figur 1 gezeigten mehrlagigen Bandes 10 beträgt insgesamt 1,2 mm, wobei die obere Schutzlage 16 aus Kunststoff eine Dicke von 0,2 mm, die Aluminiumlage 12 eine Dicke von 0,4 mm und die untere Verstärkungslage 14 aus Kunststoff eine Dik- ke von 0,6 mm aufweist. Die obere Kunststofflage 16 ist aus Polyvinylchlorid hergestellt und durchsichtig. Sie be- sitzt eine relativ geringe Steifigkeit, so dass sie eine Schutzfolie für die Aluminiumlage 12 bildet. Die untere Verstärkungslage 14 ist aus Polypropylen hergestellt und enthält Mineralfasern, die eine Ausdehnung bzw. Verformung der unteren Verstärkungslage 14 insbesondere in Längsrichtung des Bandes 10 behindern. Die Steifigkeit der unteren Verstärkungslage 14 ist deutlich höher als die der oberen Schutzlage 16, so dass die untere Verstärkungslage 14 dem Band 10 insgesamt sowie der eingeprägten reliefartigen Struktur der Aluminiumlage 12 Stabilität verleiht. Dennnoch bleibt das Band 10 derart biegsam, dass seine Oberfläche sich an gekrümmte Unterlagen anpassen kann.

In Figur 2 ist in einer Querschnittsansicht in stark vereinfachter Form eine Vorrichtung gezeigt, mit- tels derer das erfindungsgemäße Band 10 hergestellt werden kann. Die Herstellungsvorrichtung enthält im Wesentlichen eine Prägeeinheit 30, der das die Alumi- niumlage 12 bildende dünne Aluminiumband 12' zur Auf- prägung der reliefartigen Struktur 18 zugeführt wird, so- wie eine Extrusionseinheit 40, in der dem Aluminiumband 12' mit aufgeprägter Reliefstruktur 18 jeweils von unten bzw. von oben die Verstärkungslage 14 bzw. die Schutz- lage 16 aufextrudiert wird. Weiterhin enthält die in Figur 2 gezeigte Herstellungsanordnung zwischen der Prägeeinheit 30 und Extrusionseinheit 40 eine Pufferanord- nung 50, in deren Bereich das Aluminiumband 12' eine nach unten durchhängende Schlaufe 52 bildet.

In der Prägeeinheit 30 wird durch Anpressen eines Oberstempels 32 auf einen diesem zugeordneten komplementär geformten Unterstempel 34 dem Aluminiumband 12' die Reliefstruktur 18 aufgeprägt. Hierzu wird in einem ersten Arbeitsgang das noch ungeprägte Aluminiumband 12' in die Prägeeinheit 30 eingeführt, danach angehalten, der Oberstempel 32 gegen den Unterstempel 34 niedergedrückt, wieder freigegeben und danach das Aluminiumband 12' in Figur 2 nach links weiterbewegt, wobei gleichzeitig das so eben geprägte Relief aus dem Bereich der Stempel heraus transportiert wird und der als nächstes zu prägende Bereich des Aluminiumbandes 12' in die Stempelmatrizen zwischen Oberstempel 32 und Unterstempel 34 geschoben wird. Da das Aluminiumband 12' eine relativ geringe Dicke aufweist, ist es mit herkömmlich bekannten Verfahren ohne weiteres möglich, eine Prägestruktur mit scharf definierten Kanten zu erzeugen.

In der Extrusioneinheit 40 werden auf das nun die vorgesehene Reliefstruktur 18 tragende Aluminiumband 12'jeweils auf dessen Unterseite 24 bzw. dessen Oberseite 22 Kunststofflagen aufextrudiert. Hierzu um- fasst die Extrusionseinheit 40 einen ersten Extrusionskopf 42, sowie einen zweiten Extrusionskopf 44, die ein- ander gegenüber liegend angeordnet sind und zwischen denen das Aluminiumband 12' derart hindurch tranportiert wird, dass seine Unterseite 24 dem unteren Extrusionskopf 44 und seine Oberseite 22 dem oberen Extrusi- onskopf 42 zugewandt sind. Der untere Extrusionskopf 44 enthält plastifiziertes Polypropylen, dem Mineralfasern beigemischt sind, zur Ausbildung der Verstärkungslage 14. Der obere Extrusionskopf 42 enthält plastifiziertes Polyvinylchlorid zur Ausbildung der Schutzlage 16 auf der Oberseite 22 des Aluminiumbandes 12'. Das Aufbringen der beiden Lagen 14, 16 geschicht hierbei nach bekannten Verfahrensweisen.

In der Extrusionseinheit 40 wird das Aluminiumband 12' in einer kontinuierlichen Weise zu dem endgültigen mehrlagigem Band 10 verarbeitet, d.h. das Aluminiumband 12' bewegt sich mit konstanter Geschwindigkeit durch die Extrusionseinheit 40 in Figur 2 nach links. Daher ist es die Aufgabe der Pufferanordnung 50, die beiden unterschiedlichen Bewegungsarten des Alu- miniumbandes 12' in der Prägeeinheit 30 (diskontinuierliche Bewegung) und in der Extrusionseinheit 40 (Bewegung mit konstanter Geschwindigkeit) miteinander zu koordinieren, in dem sich das Aluminiumband 12' im Be- reich der Pufferanordnung 50 als mehr oder weniger stark durchhängende Schlaufe 52 formen kann.

Um die Verstärkungslage 14 unlösbar mit der Unterseite des Aluminiumbandes 12' zu verbinden, ist auf die Unterseite des Aluminiumbandes 12' ein Haftlack aufgebracht. Um die Oberseite des Aluminiumbandes 12' mit dessen eingeprägter reliefartiger Struktur 18 vor Beschädigungen durch äußere Einflüsse (insbesondere UV-Strahlung und Korrosion) zu schützen, wird auf die Oberseite des Aluminiumbandes 12' ein Schutzlack auf- gebracht. Die beiden oben genannten Lacke werden vor dem Prägevorgang auf das Metallband aufgebracht. Derartig lackierte Metallbänder können von Metallbandherstellern bezogen werden.

Das in der vorstehend beschriebenen Weise hergestellte mehrlagige (zumindest zwei-lagige) Band zeichnet sich durch geringe Material- und Herstellungskosten und hohe Formbeständigkeit aus, sowie durch besonders gutes Aussehen, da es mit komplexem Prägerelief versehen ist.

## Patentansprüche

1. Mehrlagiges Dekorband, umfassend eine von einem Metallband gebildete Oberlage (12) aus Metall, vorzugsweise aus Aluminium, deren Oberseite (22) eine reliefartige Struktur (18) aufweist und deren Unterseite (24) fest mit einer Verstärkungslage (14) versehen ist,
**dadurch gekennzeichnet, dass**
die Verstärkungslage (14) aus Kunststoff hergestellt ist und dass die Verstärkungslage auf die Unterseite (24) der bereits eine eingeprägte reliefartige Struktur (18) tragenden Oberlage (12) aufextrudiert ist, und dass eine von Hand abziehbare Schutzlage (16) aus Kunststoff auf die gesamte Oberseite (22) der bereits eine eingeprägte reliefartige Struktur (18) tragenden Oberlage (12) aufextrudiert ist.

2. Dekorband, nach Anspruch 1,
**dadurch gekennzeichnet, dass**
die reliefartige Struktur scharfe Kanten aufweist.

3. Dekorband, nach einem der Ansprüche 1 oder 2,
**dadurch gekennzeichnet, dass**
die Oberlage (12) eine Dicke von ≤ 1 mm, vorzugsweise ≤ 0,4 mm aufweist.

4. Dekorband nach einem der Ansprüche 1 bis 3,
**dadurch gekennzeichnet, dass**
die reliefartige Struktur (18) eine Tiefe von ≤ 0,5 mm, vorzugsweise ≤ 0,2 mm aufweist.

5. Dekorband nach einem der Ansprüche 1 bis 4,
**dadurch gekennzeichnet, dass**
die Verstärkungslage (14) eine Dicke von ≤ 1 mm, vorzugsweise ≤ 0,6 mm aufweist.

6. Dekorband nach einem der Ansprüche 1 bis 5,
**dadurch gekennzeichnet, dass**
die Verstärkungslage (14) Fasern, vorzugsweise Mineralfasern, zur Verstärkung enthält.

7. Dekorband nach einem der Ansprüche 1 bis 5,
**dadurch gekennzeichnet, dass**
die Verstärkungslage (14) Polyvinylchlorid (PVC), Acrylnitrilbutadienstyrol (ABS), Polyamid (PA) oder Polypropylen (PP) enthält.

8. Dekorband nach einem der Ansprüche 1 bis 7,
**dadurch gekennzeichnet, dass**
die Schutzlage (16) durchsichtig ist und bevorzugt Polyvinylchlorid (PVC), Acrylnitrilbutadienstyrol (ABS), Polyamid (PA) oder Polypropylen (PP) enthält.

9. Dekorband nach Anspruch 8,
**dadurch gekennzeichnet, dass**
die Schutzlage (16) eine Dicke von ≤ 0,5 mm, vorzugsweise von ≤ 0,2 mm aufweist.

10. Dekorband nach einem der Ansprüche 1 bis 9,
**dadurch gekennzeichnet, dass**
auf der Oberseite (22) der Oberlage (12) ein Schutzlack und/oder der Unterseite (24) der Oberlage (12) ein Haftlack aufgetragen ist.

11. Verfahren zur Herstellung eines mehrlagigen Dekorbandes, umfassend eine von einem Metallband gebildete Oberlage (12) aus Metall, vorzugsweise Aluminium, nach einem der Ansprüche 1 bis 10, wobei das Verfahren die folgenden Schritte umfasst:
a) Einführen eines dünnen Metallbands (12') zur Ausbildung der Oberlage in eine Prägeeinheit (30) und Einprägen einer reliefartigen Struktur (18) in die Oberseite (22) der Oberlage (12) und
b) nachfolgend Aufextrudieren einer Verstärkungslage (14) aus Kunststoff auf die Unterseite (24) der Oberlage (12) und einer von Hand abziehbaren Schutzlage (16) aus Kunststoff auf die gesamte Oberseite (22) der Oberlage (12).

12. Verfahren nach Anspruch 11,
**dadurch gekennzeichnet, dass**
die Verstärkungslage (14) unmittelbar nach dem Prägen der reliefartigen Struktur (18) angebracht wird, wobei die Oberlage (12) nach dem Prägen und vor dem Anbringen der Verstärkungslage (14) wenigstens eine Pufferanordnung (50) durchläuft.

13. Verfahren nach Anspruch 12,
**dadurch gekennzeichnet, dass**
die Oberlage (12) im Bereich der Pufferanordnung (50) schlaufenartig verläuft.

14. Verfahren nach einem der Ansprüche 11 bis 13,
**dadurch gekennzeichnet, dass**
vor dem Einprägen der reliefartigen Struktur (18) ein Schutzlack an der Oberseite (22) der Oberlage (12) angebracht wird.

15. Verfahren nach einem der Ansprüche 11 bis 14,
**dadurch gekennzeichnet, dass**
vor dem Einprägen der reliefartigen Struktur (18) ein Haftlack an der Unterseite (24) der Oberlage (12) angebracht wird.

## Claims

1. Laminated decorative strip, comprising an upper layer (12) consisting of metal formed by a metal strip, preferably of aluminum, whose upper face (22) has a structure in relief (18) and whose underside (24) is fixed to a reinforcement layer (14),
**characterized in that**
the reinforcement layer (14) is made of plastic and the reinforcement layer is extrusion-coated on the underside (24) of the upper layer (12), which already carries an embossed structure in relief (18), and **in that** a protective layer (16) made of plastic, which can be peeled off by hand, is extrusion-coated on the entire upper face (22) of the upper layer (12), which already carries an embossed structure in relief (18).

2. Decorative strip in accordance with Claim 1,
**characterized in that**
the structure in relief has sharp edges.

3. Decorative strip in accordance with one of the Claims 1 or 2,
**characterized in that**
the upper layer (12) has a thickness of ≤ 1 mm, preferably ≤ 0.4 mm.

4. Decorative strip in accordance with one of the Claims 1 to 3,
**characterized in that**
the structure in relief (18) has a depth of ≤ 0.5 mm, preferably ≤ 0.2 mm.

5. Decorative strip in accordance with one of the Claims 1 to 4,
**characterized in that**
the reinforcement layer (14) has a thickness of ≤ 1 mm, preferably ≤ 0.6 mm.

6. Decorative strip in accordance with one of the Claims 1 to 5,
**characterized in that**
the reinforcement layer (14) contains fibers, preferably mineral fibers, for reinforcement.

7. Decorative strip in accordance with one of the Claims 1 to 5,
**characterized in that**
the reinforcement layer (14) comprises polyvinylchloride (PVC), acrylnitrilbutadienstyrol (ABS), polyamide (PA) or polypropylene (PP).

8. Decorative strip in accordance with one of the Claims 1 to 7,
**characterized in that**
the protective layer (16) is transparent and preferably comprises polyvinylchloride (PVC), acrylnitrilbutadienstyrol (ABS), polyamide (PA) or polypropylene (PP).

9. Decorative strip in accordance with Claim 8,
**characterized in that**
the protective layer (16) has a thickness of ≤ 0.5 mm, preferably of ≤ 0.2 mm.

10. Decorative strip in accordance with one of the Claims 1 to 8,
**characterized in that**
a protective varnish is applied to the upper face (22) of the upper layer (12) and/or an adhesive varnish is applied to the underside (24) of the upper layer (12).

11. Method for the production of a laminated decorative strip, comprising an upper layer consisting of metal (12) formed by a metal strip, preferably of aluminum, in accordance with one of the claims 1 to 10, with the method comprising the following steps:
a. Inserting a thin metal strip (12') into an embossing unit (30) to develop the upper layer and embossing a structure in relief (18) into the upper face (22) of the upper layer (12), and
b. then extrusion-coating a reinforcement layer consisting of plastic on the underside (24) of upper layer (12) and a protective layer (16) made of plastic, which can be peeled off by hand, on the entire upper face (22) of the upper layer (12).

12. Method in accordance with Claim 11,
**characterized in that**
the reinforcement layer (14) is attached directly after embossing of the structure in relief (18), with the upper layer (12) passing through at least one buffer arrangement (50) after the embossing and prior to attaching the reinforcement layer (14).

13. Method in accordance with Claim 12,
**characterized in that**
the upper layer (12) runs like a loop in the area of the buffer arrangement (50).

14. Method in accordance with one of the Claims 11 to 13,
**characterized in that**
a protective varnish is applied on the upper face (22) of the upper layer (12) prior to embossing the structure in relief (18).

15. Method in accordance with one of the Claims 11 to 14,
**characterized in that**
an adhesive varnish is applied to the underside (24) of the upper layer (12) prior to embossing the structure in relief (18).

## Revendications

1. Bande de décoration multicouche, comportant une couche supérieure (12) en métal, formée par une bande en métal, de préférence en aluminium, dont la face supérieure (22) comporte une structure (18) en relief et dont la face inférieure (24) est munie de manière fixe d'une couche de renfort (14),
**caractérisée en ce que**
la couche de renfort (14) est réalisée en matière synthétique et **en ce que** la couche de renfort est extrudée sur la sur la face inférieure (24) de la couche supérieure (12) portant déjà une structure (18) en relief estampée, et **en ce que** une couche de protection (16) en matière synthétique, qui est pelable à la main, est extrudée sur la face supérieure (22) entière da la couche supérieure (12) partant déjà une structure (18) en relief estampée.

2. Bande de décoration selon la revendication 1,
**caractérisée en ce que**
la structure en relief comporte des arêtes vives.

3. Bande de décoration selon la revendication 1 ou 2,
**caractérisée en ce que**
la couche supérieure (12) a une épaisseur de ≤ 1 mm, de préférence ≤ 0,4 mm.

4. Bande de décoration selon l'une quelconque des revendications 1 à 3,
**caractérisée en ce que**
la structure (18) en relief a une profondeur de ≤ 0,5 mm, de préférence ≤ 0,2 mm.

5. Bande de décoration selon l'une quelconque des revendications 1 à 4,
**caractérisée en ce que**
la couche de renfort (14) a une épaisseur de ≤ 1 mm, de préférence ≤ 0,6 mm.

6. Bande de décoration selon l'une quelconque des revendications 1 à 5,
**caractérisée en ce que**
la couche de renfort (14) contient des fibres, de préférence des fibres minérales, en vue de la renforcer.

7. Bande de décoration selon l'une quelconque des revendications 1 à 5,
**caractérisée en ce que**
la couche de renfort (14) contient du chlorure de polyvinyle (PVC), de l'acrylonitrile butadiène styrène (ABS), du polyamide (PA) ou du polypropylène (PP).

8. Bande de décoration selon l'une quelconque des revendications 1 à 7,
**caractérisée en ce que**
la couche de protection (16) est transparente et contient de préférence du chlorure de polyvinyle (PVC), de l'acrylonitrile butadiène styrène (ABS), du polyamide (PA) ou du polypropylène (PP).

9. Bande de décoration selon la revendication 8,
**caractérisée en ce que**
la couche de protection (16) supplémentaire a une épaisseur de ≤ 0,5 mm, de préférence ≤ 0,2 mm.

10. Bande de décoration selon l'une quelconque des revendications 1 à 8,
**caractérisée en ce que**
sur la face supérieure (22) de la couche supérieure (12) est déposé un vernis de protection et/ou sur la face inférieure (24) de la couche supérieure (12) est déposé un vernis adhésif.

11. Procédé de réalisation d'une bande de décoration multicouche, comportant une couche supérieure (12) en métal, formée par une bande en métal, de préférence en aluminium, selon l'une quelconque des revendications 1 à 10, ledit procédé comportant les étapes suivantes:
a) introduction d'une mince bande métallique (12') dans une unité d'estampage (30) en vue de réaliser la couche supérieure, et estampage d'une structure (18) en relief dans la face supérieure (22) de la couche supérieure (12), et
b) ensuite, extrusion d'une couche de renfort (14) en matière synthétique sur la face inférieure (24) de la couche supérieure (12) et d'une couche de protection (16) en matière synthétique, qui est pelable à la main, est extrudée sur la face supérieure (22) entière da la couche supérieure (12).

12. Procédé selon la revendication 11,
**caractérisé en ce que**
la couche de renfort (14) est déposée directement après l'estampage de la structure (18) en relief, la couche supérieure (12) passant à travers au moins un dispositif de stockage intermédiaire (50) à la suite de l'estampage et avant l'application de la couche de renfort (14).

13. Procédé selon la revendication 12,
**caractérisé en ce que**
la couche supérieure (12) s'étend en forme de boucle dans la zone du dispositif de stockage intermédiaire (50).

14. Procédé selon l'une quelconque des revendications 11 à 13,
**caractérisé en ce que**,
avant l'estampage de la structure (18) en relief, un vernis de protection est déposé sur la face supérieure (22) de la couche supérieure (12).

15. Procédé selon l'une quelconque des revendications 11 à 14,
**caractérisé en ce que**,
avant l'estampage de la structure (18) en relief, un vernis adhésif est déposé sur la face inférieure (24) de la couche supérieure (12).
